# EUROPÄISCHE PATENTSCHRIFT

(11) **EP 1 045 808 B1**
(45) Veröffentlichungstag und Bekanntmachung des Hinweises auf die Patenterteilung: **26.03.2003**
(21) Anmeldenummer: 99907358.8
(22) Anmeldetag: 08.01.1999
(51) Int. Cl.: B65G 47/61, B65G 19/02, E01B 25/26

(54) **FÖRDEREINRICHTUNG MIT EINEM ÜBERNAHMEFÖRDERER ZUR ÜBERNAHME VON FÖRDERGUTTRÄGERN VON EINEM HÄNGEFÖRDERER**
CONVEYING DEVICE WITH A TRANSFER CONVEYOR FOR TRANSFERRING CONVEYED ITEM CARRIERS FROM A SUSPENDED CONVEYOR
DISPOSITIF DE TRANSPORT POURVU D'UN TRANSPORTEUR DE PRISE EN CHARGE SERVANT A LA PRISE EN CHARGE DE SUPPORTS D'OBJETS A TRANSPORTER PROVENANT D'UN TRANSPORTEUR SUSPENDU

(30) Priorität: 09.01.1998 DE 19800630
(43) Veröffentlichungstag der Anmeldung: 25.10.2000
(73) Patentinhaber: WF Logistik GmbH, 86899 Landsberg (DE)
(72) Erfinder: BEYER, Rolf, Peter, D-86807 Buchloe (DE)
(74) Vertreter: Tiesmeyer, Johannes, Dipl.-Phys. Dr.
(86) Internationale Anmeldenummer: EP9900081
(87) Internationale Veröffentlichungsnummer: WO99035065

(56) Entgegenhaltungen:
- DE-A- 19 624 503
- DE-U- 9 402 990
- DE-U- 29 519 284
- GB-A- 2 243 816
- US-A- 5 404 992

## Beschreibung

Die Erfindung betrifft eine Fördereinrichtung mit einem Übernahmeförderer zur Übernahme von Eingriffsmittel aufweisenden Fördergutträgern von einem Hängeförderer, bei dem die Fördergutträger an einem Laufrollen-Führungsprofil zur Bewegung längs einer ersten Förderstrecke geführt und an eigenen Laufrollen hängend abgestützt sind, und zur Weiterleitung übernommener Fördergutträger längs einer zweiten Förderstrecke, wobei die erste Förderstrecke und die zweite Förderstrecke an einer Übernahmestelle eng benachbart seitlich versetzt verlaufen.

Fördereinrichtungen der vorstehend genannten Art sind beispielsweise aus der US-5 404 992 A und aus der DE 94 02 990 U1 bekannt. Bei diesen bekannten Fördereinrichtungen weist der Hängeförderer in einer horizontalen Ebene geradlinig verlaufende Führungsschienen für die Fördergutträger und Umlenkräder an axialen Enden der Führungsschienen auf. Die Umlenkräder dienen dazu, ein Endlos-Reibband eines Reibbandantriebs umzulenken. Sie sind ferner dazu eingerichtet, von einer betreffenden Schiene herangeführte Fördergutträger aufzunehmen und unter Änderung der Bewegungsrichtung der aufgenommenen Fördergutträger an einen weiteren Förderer weiterzuleiten, welcher eine geradlinige horizontale Führungsschiene mit einem Laufrollen-Führungsprofil für die Fördergutträger aufweist, wobei die Führungsschiene in geringem Abstand zu dem betreffenden Umlenkrad tangential dazu verläuft. Die vorstehend erwähnten Fördereinrichtungen nach dem Stand der Technik erlauben jedoch im Wesentlichen nur eine Übernahme und Weiterleitung der Fördergutträger in der Ebene des Hängeförderers.

Der Erfindung liegt die Aufgabe zugrunde, eine Fördereinrichtung der eingangs genannten Art mit einem Übernahmeförderer bereitzustellen, der raumgängig ausgebildet sein kann, um Fördergutträger zwischen verschiedenen horizontalen Ebenen transportieren zu können, und der bei einfachem Aufbau zuverlässig funktioniert sowie eine hohe und und insbesondere kontinuierliche Förderleistung ermöglicht.

Zur Lösung dieser Aufgabe wird bei einer Fördereinrichtung mit den Merkmalen des Oberbegriffs des Anspruchs 1 erfindungsgemäß vorgeschlagen, daß der Übernahmeförderer eine Reihe aufeinanderfolgend an einem gemeinsamen Zugmittel angeordneter und von dem Zugmittel entlang der zweiten Förderstrecke bewegter Aufnahmeelemente für die Fördergutträger aufweist und die Aufnahmeelemente derart geführt sind, dass sie an der Übernahmestelle eine Hubbewegung relativ zu dem Laufrollen-Führungsprofil des Hängeförderers ausführen, um jeweils von dem Hängeförderer längs der ersten Förderstrecke der Übernahmestelle zugeführte Fördergutträger an den davon abstehenden Eingriffsmitteln zur Mitnahme längs der zweiten Förderstrecke in Eingriff zu nehmen und von dem Führungsprofil des Hängeförderers abzuheben.

Es gibt verschiedene Möglichkeiten, die Aufnahmeelemente beim Durchlauf an der Übernahmestelle so zu führen, daß ihre Bewegung eine Hubkomponente aufweist. Eine Möglichkeit besteht darin, daß das Zugmittel die Aufnahmeelemente um die Zugmittellängsachse nach oben hin verschwenkt, um so ein Ausheben der Fördergutträger aus dem Laufrollen-Führungsprofil der Hängefördereinrichtung unter gleichzeitiger Ineingriffnahme der Fördergutträger zu bewirken.

Gemäß einer bevorzugten Ausführungsform weist jedoch die zweite Förderstrecke, d.h. die Förderstrecke des Übernahmeförderers, an der Übernahmestelle eine Steigung mit einem spitzen Steigungswinkel relativ zu der üblicherweise horizontal verlaufenden ersten Förderstrecke auf, so daß die Aufnahmeelemente bei der Bewegung längs der Steigung die Eingriffsmittel der nacheinander der Übernahmestelle längs der ersten Förderstrecke zugeführten Fördergutträger untergreifen können. Hierzu wird vorgeschlagen, daß die Aufnahmeelemente jeweils einen Hakenabschnitt aufweisen, mit dem sie das Eingriffsmittel eines jeweils an der Übernahmestelle befindlichen Fördergutträgers bei ihrer Bewegung längs der Steigung der zweiten Förderstrecke automatisch hinter- und untergreifen, um den Fördergutträger von dem Laufrollen-Führungsprofil der Hängefördereinrichtung abzuheben.

Die Aufnahmeelemente können längs der zweiten Förderstrecke derart geführt sein, daß sie unmittelbar nach Passieren der Übernahmestelle nicht nur den vertikalen Abstand zur ersten Förderstrecke vergrößern, sondern auch ihren seitlichen Abstand.

Gemäß einer besonders bevorzugten Ausführungsform kann der Übernahmeförderer Fördergutträger konventioneller Bauart aufnehmen und transportieren. Hierbei handelt es sich um Fördergutträger, die einen zentralen Trägerabschnitt aufweisen, von dem an zwei einander gegenüberliegenden Seiten jeweils eine Laufrolle eines Laufrollenpaares absteht, wobei ein betreffender Fördergutträger in der Hängefördereinrichtung jeweils mit einer der beiden Laufrollen an dem Laufrollen-Führungsprofil seitlich angehängt und an dieser Laufrolle geführt ist. Die Besonderheit im Rahmen der vorliegenden Erfindung besteht nun darin, daß die andere Laufrolle als Eingriffsmittel für die Ineingriffnahme durch ein betreffendes Aufnahmeelement des Übernahmeförderers dient. Der Übernahmeförderer nach der Erfindung erfordert daher weder bei einer konventionellen Hängefördereinrichtung für derartige Fördergutträger noch bei den Fördergutträgern irgendwelche Anpassungs- und Änderungsmaßnahmen, um die Funktion der Fördergutträgerübernahme zu realisieren.

Bei den vorstehend genannten Fördergutträgern kann es sich beispielsweise um sogenannte Bügelträger handeln, die an ihrem unteren Ende einen Haken aufweisen. An den Haken kann ein Kleiderbügel mit einem daran befindlichen Kleidungsstück angehängt werden. Die hier betrachtete Fördereinrichtung eignet sich daher insbesondere für den Einsatz in der Bekleidungsindustrie, Wäschereien usw.

Ein weiterer Vorteil ist darin zu sehen, daß der Übernahmeförderer nach der Erfindung dazu eingesetzt werden kann, Fördergut zwischen verschiedenen Stockwerken oder zwischen verschiedenen Höhenniveaus innerhalb eines Stockwerkes zu transportieren. Die Aufnahmeelemente können hierzu so gestaltet sein, daß sie die Fördergutträger sowohl bei Aufwärtsfahrt als auch bei Abwärtsfahrt längs beliebiger Steigungen bzw. Gefälleneigungen sicher halten.

Das Zugmittel ist vorzugsweise ein als Endlosschleife ausgebildetes, um zwei Umlenkeinrichtungen umlaufend angetriebenes und längs der zweiten Förderstrecke geführtes Antriebsband, das am Schleifenumfang die Aufnahmeelemente für die Fördergutträger in einer Endlosreihe aufweist.

Wenngleich das Antriebsband ein kontinuierlich zusammenhängendes Stahlband, Kunststoffband oder Gummiband sein kann, ist es gemäß einer bevorzugten Ausführungsform als Kette, insbesondere Gelenkkette, ausgebildet, die vorzugsweise in einer Kettenführungsnut geführt ist.

Die Kette ist zur kontinuierlichen Bewegung antreibbar, wobei der Bewegungsablauf der Aufnahmeelemente an der Übernahmestelle und die Geometrie und Teilung der Aufnahmeelemente so auf die Fördergeschwindigkeit des Hängeförderers abgestimmt sind, daß jeder von dem Hängeförderer der Übernahmestelle zugeführte Fördergutträger einzeln von einem jeweiligen Aufnahmeelement des Übernahmeförderers zur Mitnahme längs der zweiten Förderstrecke in Eingriff genommen wird. Es ist hierzu nicht erforderlich, die Fördergutträger getaktet oder mit Abstand voneinander separiert längs der ersten Förderstrecke der Übernahmestelle zuzuführen. Die Fördergutträger können einzeln in regelmäßigen oder unregelmäßigen Abständen voneinander oder gruppenweise in einem Block der Übernahmestelle zugeführt werden. In jedem Fall wird jeder Fördergutträger von dem kontinuierlich angetriebenen Übernahmeförderer in ein jeweiliges Aufnahmeelement übernommen und somit in die zweite Förderstrecke eingeleitet. Mit einer Versuchsanlage wurde eine Fördergeschwindigkeit von 0,5 m/s erzielt. Bei lückenloser Zuführung der Fördergutträger zur Übernahmestelle entsprach dies einer Förderleistung von ca. 45 000 Fördergutträgern pro Stunde.

Ein interessanter Gesichtspunkt liegt darin, daß der Übernahmeförderer eine Weichenfunktion ausüben kann. Hierzu ist gemäß einer Weiterbildung der Erfindung vorgesehen, daß der Abstand zwischen der ersten Förderstrecke und der zweiten Förderstrecke an der Übernahmestelle gesteuert veränderbar ist, so daß die auf der ersten Förderstrecke befindlichen Fördergutträger unbeeinflußt von den außer Reichweite bewegten Aufnahmeelementen auf der ersten Förderstrecke verbleibend die Übergangsstelle passieren können, wenn der Abstand zwischen den Förderstrecken an der Übergangsstelle um einen bestimmten Wert vergrößert ist.

Vorzugsweise hat der Übernahmeförderer einen Übernahmekopf, der eine der Umlenkeinrichtungen für das Zugmittel aufweist und der in einer aktiven Position die Aufnahmeelemente zur Eingriffnahme von Fördergutträgern an die erste Förderstrecke heranführt. Gemäßeiner Weiterbildung der Erfindung ist der Übernahmekopf zwischen der aktiven Position und einer passiven Position relativ zu dem Hängeförderer bewegbar, insbesondere schwenkbar, wobei er in der passiven Position die Aufnahmeelemente außer Reichweite zu den auf der ersten Förderstrecke bewegten Fördergutträgern führt.

Ferner wird vorgeschlagen, daß die zweite Förderstrecke, also die Förderstrecke des Übernahmeförderers, an einer Übergabestelle eng benachbart seitlich versetzt zu einer dritten Förderstrecke verläuft, die entsprechend der ersten Förderstrecke ein Laufrollen-Führungsprofil für die Fördergutträger aufweist, und daß die Aufnahmeelemente derart geführt sind, daß sie an der Übergabestelle eine Absenkbewegung relativ zu dem Laufrollen-Führungsprofil der dritten Förderstrecke ausführen, um von der ersten Förderstrecke aufgenommene Fördergutträger mit ihren jeweils von den Aufnahmeelementen nach außen abstehenden freien Laufrollen in das Laufrollen-Führungsprofil der dritten Förderstrecke von oben her einzusetzen. Die Übergabe der Fördergutträger erfolgt automatisch und in komplementärer Weise zu der Übernahme von der ersten Förderstrecke. Vorzugsweise weist die zweite Förderstrecke an der Übernahmestelle eine Neigung mit einem Neigungswinkel relativ zu der dritten Förderstrecke auf, wobei die unter dem Neigungswinkel der Übergabestelle zugeführten Fördergutträger an ihren von den Aufnahmeelementen nach außen abstehenden, freien Laufrollen von dem Laufrollen-Führungsprofil der dritten Förderstrecke derart in Eingriff genommen werden, daß sie zwangsweise von den Aufnahmeelementen freikommen und an die dritte Förderstrecke übergeben werden.

Die Aufnahmeelemente sind vorzugsweise so geführt, daß sie unmittelbar nach Passieren der Übergabestelle unter Vergrößerung ihres Abstandes zur dritten Förderstrecke seitlich abgelenkt werden.

Zur Realisierung einer Weichenfunktion kann es vorgesehen sein, daß der Abstand zwischen der zweiten Förderstrecke und der dritten Förderstrecke an der Übergabestelle gesteuert veränderbar ist, so daß die Fördergutträger unbeeinflußt von dem Laufrollen-Führungsprofil der dritten Förderstrecke die Übergabestelle auf der zweiten Förderstrecke verbleibend passieren, wenn der Abstand zwischen der zweiten Förderstrecke und der dritten Förderstrecke an der Übergabestelle auf einen bestimmten Wert vergrößert ist.

Zur Abgabe der Fördergutträger an die dritte Förderstrecke kann der Übernahmeförderer einen die Aufnahmeelemente an die dritte Förderstrecke heranführenden Übergabekopf mit einer Umlenkeinrichtung für das Zugmittel aufweisen.

Zur Realisierung der Weichenfunktion ist der Übergabekopf zwischen seiner an die dritte Förderstrecke angenäherten aktiven Position und einer passiven Position relativ zu der dritten Förderstrecke bewegbar, insbesondere schwenkbar, wobei er in der passiven Position die Aufnahmeelemente außer Reichweite zu der dritten Förderstrecke führt, so daß die Fördergutträger die Übergabestelle auf der zweiten Förderstrecke verbleibend passieren können.

Ein besonderer Vorteil ist darin zu sehen, daßdie zweite Förderstrecke, also die Förderstrecke des Übernahmeförderers, dreidimensionalen Verlauf mit Steigungen, Gefällen und seitlichen Kurven aufweisen kann, wobei die Fördergutträger mit oder ohne Fördergut zuverlässig an den Aufnahmeelementen gehalten sind.

Die Aufnahmeelemente sind hierzu vorzugsweise mit einer taschenartigen Vertiefung zur Aufnahme der betreffenden Laufrolle eines Fördergutträgers ausgestattet, wobei die taschenartige Vertiefung eine der Form der Laufrolle angepaßte Kontur hat. Vorzugsweise haben die Aufnahmeelemente jeweils eine die Laufrolle bei der Aufnahme des betreffenden Fördergutträgers in die taschenartige Vertiefung einweisende Aufnahmerinne und ferner seitlich der taschenartigen Vertiefung einen nach oben abstehenden und nach vorne hin offenen Hakenabschnitt, der eine in der taschenartigen Vertiefung aufgenommene Laufrolle eines aufgegriffenen Fördergutträgers übergreift.

Eine derartige Geometrie der Aufnahmeelemente erlaubt eine zuverlässige und sichere Übernahme der Fördergutträger im kontinuierlichen Betrieb bei hoher Fördergeschwindigkeit.

Jedes Aufnahmeelement stützt einen jeweils aufgenommenen Fördergutträger schwenkbeweglich um die Laufrollenachse an dessen Laufrolle ab, so daß sich der Fördergutträger unter Wirkung der Schwerkraft vertikal ausrichten kann, wenn das Aufnahmeelement bei Bewegung längs einer Steigung oder bei Bewegung längs einer Neigung der zweiten Förderstrecke eine Schrägstellung relativ zur Vertikalen erfährt, wobei das Aufnahmeelement eine erste Verriegelungskerbe aufweist, die mit einer ersten Verriegelungskante des Fördergutträgers in Eingriff kommt, um den Fördergutträger am Aufnahmeelement bei Bewegung längs einer einen vorbestimmten Steigungswinkel überschreitenden Steigung der zweiten Förderstrecke zu sichern. In entsprechender Weise kann eine zweite Verriegelungskerbe vorgesehen sein, die mit einer zweiten Verriegelungskante des Fördergutträgers in Eingriff kommt, um den Fördergutträger am Aufnahmeelement bei Bewegung längs einer einen vorbestimmten Neigungswinkel überschreitenden Gefälleneigungderzweiten Förderstrecke zu sichern.

Weitere Vorteile, zweckmäßige Details und Merkmale der Erfindung gehen aus der folgenden Beschreibung eines Ausführungsbeispiels hervor, wobei auf die Figuren 1 - 5 Bezug genommen wird.
- Fig. 1: zeigt in einer Seitenansicht eine vereinfachte, teils schematisierte Darstellung einer Fördereinrichtung nach der Erfindung, wobei der durch ein Gliederband repräsentierte Übernahmeförderer zum Transport von Fördergutträgern und ggf. daran befindlichem Fördergut von einem unteren Stockwerk in ein oberes Stockwerk eingesetzt ist.
- Fig. 2: zeigt eine schematisierte Teildarstellung eines Übernahmekopfes an der Übernahmestelle in einer Draufsicht mit der in Fig. 1 bei II angedeuteten Blickrichtung, wobei die Fördergutträger mit einem Schnitt oberhalb der Laufrollen dargestellt sind.
- Fig. 3: zeigt einen von einem Aufnahmeelement des Übernahmeförderers in Eingriff genommenen Fördergutträger in einer Vorderansicht, wobei zu Erläuterungszwecken zusätzlich angedeutet ist, wie ein solcher Fördergutträger normalerweise an der Laufschiene eines Hängeförderers geführt ist.
- Fig. 4a und 4b: zeigen einen von einem Aufnahmeelement des Übernahmeförderers in Eingriff genommenen Fördergutträger bei Steigungsfahrt bzw. bei Gefällefahrt längs der zweiten Förderstrecke, wobei in Fig. 4a die in Eingriff genommene Laufrolle des Fördergutträgers teilweise aufgebrochen und im Schnitt angedeutet ist.
- Fig. 5a - 5d: zeigen ein Aufnahmeelement des Übernahmeförderers in Vorderansicht, Seitenansicht, Rückansicht und Draufsicht.

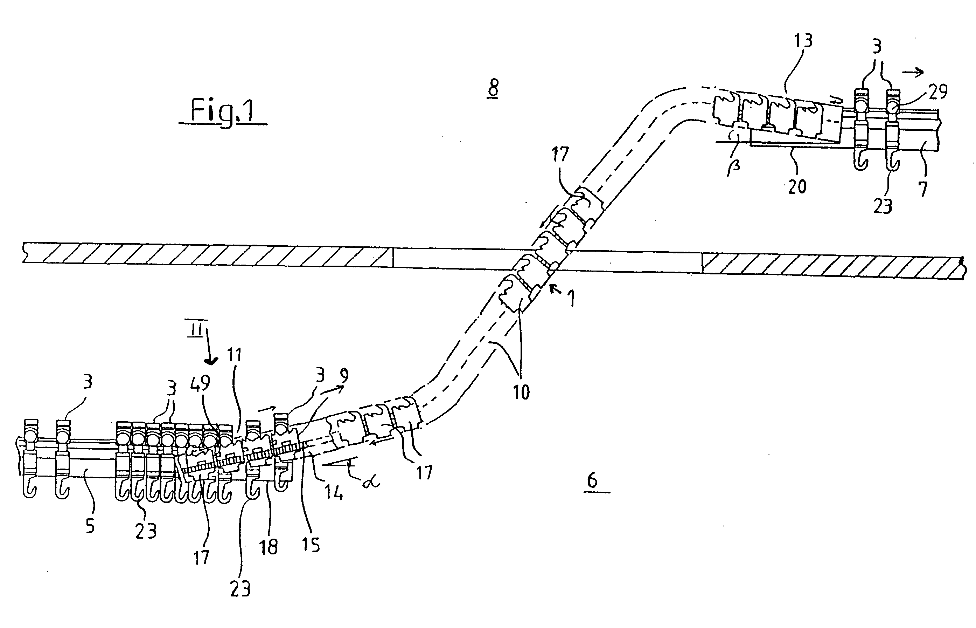

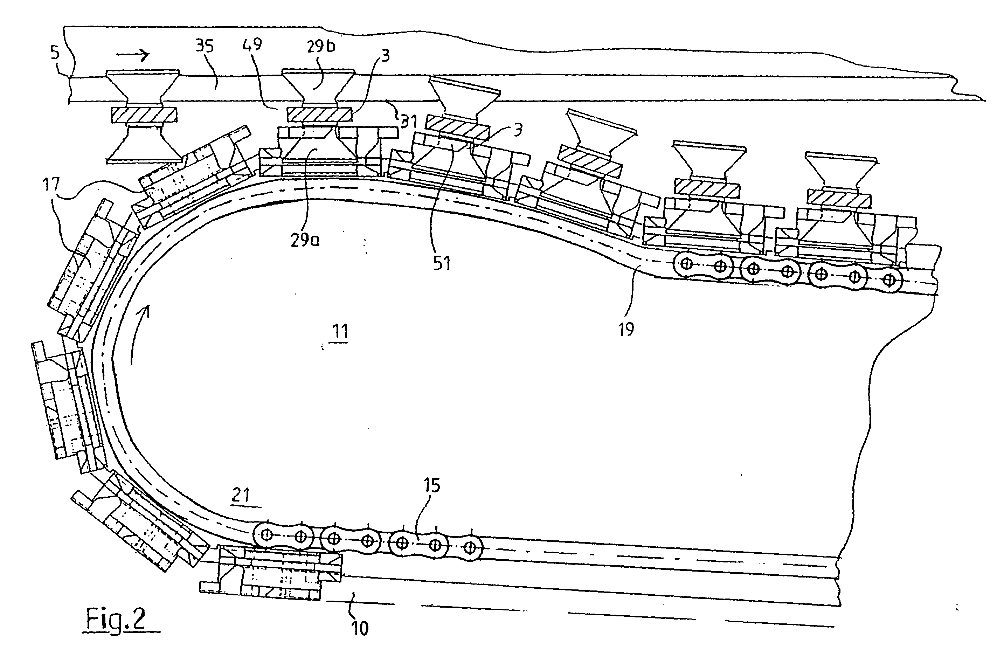

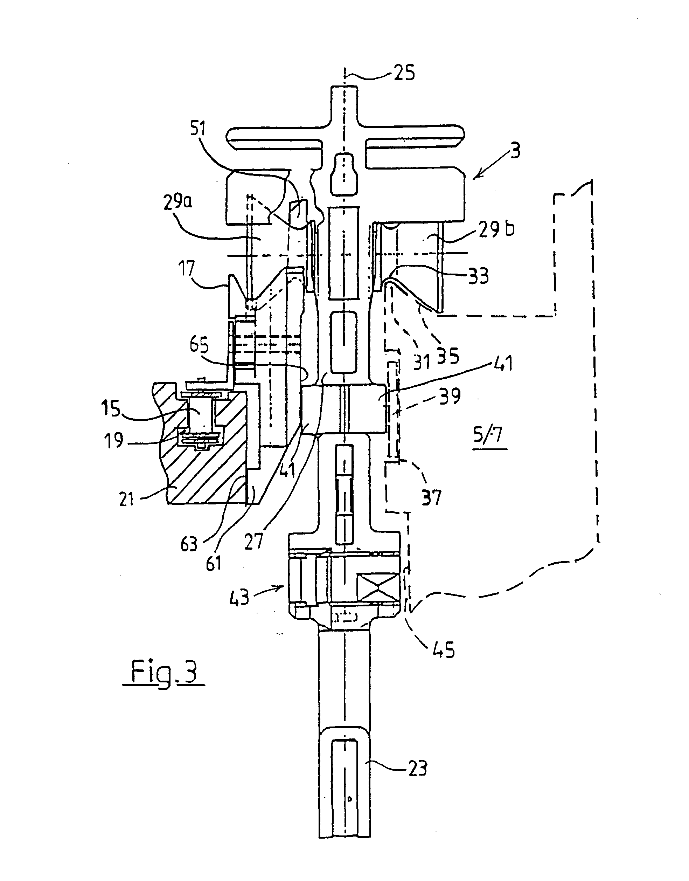

Fig. 1 illustriert eine vorteilhafte Einsatzmöglichkeit eines Übernahmeförderers 1 nach der Erfindung, wobei der Übernahmeförderer 1 Fördergutträger 3 von einem eine erste Förderstrecke 5 repräsentierenden Hängeförderer in einem unteren Stockwerk 6 längs einer zweiten Förderstrecke 9 zu einem eine dritte Förderstrecke 7 repräsentierenden zweiten Hängeförderer in einem oberen Stockwerk 8 transportiert. Der Übersichtlichkeit halber ist in Fig. 1 von dem Übernahmeförderer 1 lediglich ein bei 14 aufgebrochen dargestelltes Gliederband 10 gezeigt, das eine geschlossene Schleife bildet und an einem Übernahmekopf bei 11 sowie an einem Übergabekopf bei 13 umgelenkt wird. Rahmenteile und Befestigungsvorrichtungen der Hängeförderer und des Übernahmeförderers sind in Figur 1 nicht eingezeichnet. Das Gliederband 10 besteht aus einer Antriebskette 15, die als Gelenkkette (Seitenbogenkette) ausgebildet ist, und aus Aufnahmeelementen 17 für die Fördergutträger 3, wobei die Aufnahmeelemente 17 der Reihe nach aufeinanderfolgend an betreffenden Laschen der Antriebskette 15 befestigt sind. Die von einem (nicht gezeigten) Motor stetig umlaufend angetriebene Antriebskette 15 ist aufgrund ihres Gelenkspiels in begrenztem Maße raumgelenkig, so daß die Kettenlaufbahn und somit die zweite Förderstrecke 9 unterschiedliche Steigungen, Gefälle und Kurven aufweisen kann, wie dies in Fig. 1 gezeigt ist. Die Antriebskette 15 ist längs ihres Laufweges in einer Kettenführungsnut 19 (vgl. Fig. 2 und Fig. 3) geführt, die in dem von den Aufnahmeelementen 17 umgebenen Rahmen 21 des Übernahmeförderers 1 ausgebildet ist. In dem dargestellten Ausführungsbeispiel handelt es sich bei der ersten und der dritten Förderstrecke 5 bzw. 7 um Strecken eines jeweiligen Förderkreises mit Umlenkstationen bei 18 und 20.

Bei den Fördergutträgern 3 handelt es sich in dem Ausführungsbeispiel um Bügelträger, die an ihrem unteren Ende Haken 23 zum Einhängen von Kleiderbügeln oder dergleichen aufweisen. Die Kleiderbügel und ggf. daran befindliche Kleidungsstücke sind in den Figuren nicht dargestellt. Selbstverständlich ist die hier erläuterte Förderanlage jedoch dazu eingerichtet, Bügelträger 3 mit oder ohne daran angehängtes Fördergut zu transportieren.

Zur Erläuterung des Aufbaus der Bügelträger 3 wird nachstehend zunächst auf Fig. 3 Bezug genommen.

Fig. 3 zeigt in einer Vorderansicht einen im wesentlichen symmetrisch zu der Längsmittellinie 25 aufgebauten Bügelträger 3, der von einem Aufnahmeelement 17 der Übergabefördereinrichtung in Eingriff genommen ist. Der Bügelträger 3 hat einen in Fig. 3 senkrecht herabhängenden, länglichen Zentralteil 27, der an seinem unteren Ende den Haken 23 zum Einhängen eines Kleiderbügels oder dergleichen aufweist. Im oberen Bereich stehen von dem länglichen Zentralteil 27 Laufrollen 29a, 29b symmetrisch zur Mittellinie 25 seitlich ab. Die näherungsweise kegelstumpfförmigen Laufrollen 29a, 29b sind über eine gemeinsame Welle an dem länglichen Zentralteil 27 drehbar gelagert.

Die Laufrollen 29a, 29b dienen normalerweise dazu, den Bügelträger 3 auf seiner linken Seite oder seiner rechten Seite rollbeweglich und hängend an einer Laufschiene einer Hängefördereinrichtung, wie sie in Fig. 1 bei 5 bzw. bei 7 teilweise dargestellt ist, abzustützen. Zu Erläuterungszwecken ist in Fig. 3 bei 5/7 die Querschnittskontur einer Laufschiene einer solchen Hängefördereinrichtung teilweise und schematisch mit gestrichelten Linien angedeutet. Damit soll illustriert werden, wie der Bügelträger 3 vor Übernahme durch den Übernahmeförderer 1 oder nach Übergabe von dem Übernahmeförderer 1 an einer betreffenden Laufschiene der ersten Förderstrecke 5 bzw. der dritten Förderstrecke 7 geführt war bzw. geführt wird. Das Laufprofil der Schiene 5/7 weist eine Spitze 31 auf, die in der in Fig. 3 auf der rechten Bildseite angedeuteten Situation in eine Kehle 33 der Laufrolle 29b eingreift. Die an die Spitze 31 anschließende Laufprofilschrägfläche 35 hat eine der Kegelstumpfkonturschräge der Laufrollen 29 angepaßte Neigung, so daß die Laufrolle 29b und somit der Bügelträger 3 zuverlässig an der Laufschiene 5/7 zur Bewegung in Längsrichtung der Laufschiene 5/7 geführt ist. Unterhalb der Lauffläche 35 ist in der Laufschiene 5/7 eine Führung 37 vorgesehen, in der ein in Schienenlängsrichtung bewegtes Reibband 39 eines Reibband-Antriebs aufgenommen ist. An der dem Reibband 39 zugewandten Seite enthält der Bügelträger 3 einen von dem länglichen Zentralteil 27 abstehenden und mit einer äußeren Reibfläche versehenen Fördervorsprung 41, der an dem Reibband 39 anliegt, wenn der Bügelträger 3 unter Wirkung seines Eigengewichts an der Laufbahn 35 der Schiene 5/7 angehängt ist, wobei der Fördervorsprung 41 durch das Gewicht des an dem Haken 23 hängenden Fördergutes (nicht gezeigt) in noch engeren Kontakt mit dem Reibband 39 gedrückt wird. Bei der reibschlüssigen Mitnahme des Bügelträgers 3 durch das Reibband 39 rollt die Laufrolle 29b geführt an der Laufbahn 35 der Schiene 5/7 ab. An der dem Fördervorsprung 41 gegenüberliegenden Seite der Mittellinie 25 ist ein entsprechender Fördervorsprung 41 vorgesehen, der in gleicher Weise mit dem Reibband 39 in Eingriff treten kann, wenn der Bügelträger 3 um 180° um seine Längsachse gedreht wird und mit seiner Laufrolle 29a an der Laufbahn 35 angehängt wird.

Zum Abkoppeln des Bügelträgers 3 von dem Reibband-Antrieb bei 39 ist ein Spreizmechanismus 43 vorgesehen, der den Bügelträger 3 an der Anlagefläche 45 der Laufschiene 5/7 abstützt und dabei den Fördervorsprung 41 durch Verkippen des Bügelträgers 3 von dem Reibband 39 trennt. Der Spreizmechanismus 43 wird beim Aufstauen einer Gruppe von Bügelträgern 3 von einem Eingriffsabschnitt eines vorausgehend benachbarten Bügelträgers betätigt.

Bei dem beschriebenen Ausführungsbeispiel ist der Übernahmeförderer nach der Erfindung dazu eingerichtet, Bügelträger 3 gemäß Fig. 1 von der Laufschiene der ersten Förderstrecke 5 der im unteren Stockwerk 6 befindlichen Hängefördereinrichtung selbsttätig und der Reihe nach aufzugreifen und auf der Laufschiene der dritten Förderstrecke 7 der im oberen Stockwerk 8 befindlichen Hängefördereinrichtung abzusetzen. Der Übernahmeförderer 1 weist einen Übernahmekopf 11 mit Umlenkführung für das Gliederband 10 (vgl. Fig. 2) auf. Der Übernahmekopf 11 führt die Aufnahmeelemente 17 an einer Übernahmestelle 49 nahe an die Laufschiene der ersten Förderstrecke 5 der Hängefördereinrichtung im unteren Stockwerk 6 heran, wobei der Übernahmekopf 11 das Gliederband 10 unter einem Steigungswinkel α (vgl. Fig. 1) relativ zu der im wesentlichen horizontal verlaufenden Laufschiene der ersten Förderstrecke 5 an der Übernahmestelle 49 vorbeiführt. Befindet sich nun ein Bügelträger 3 im Bereich der Übernahmestelle 49 auf der Laufschiene der ersten Förderstrecke 5, so wird er von einem betreffenden Aufnahmeelement 17 des Gliederbandes 10 an seiner der Laufschiene abgewandten Laufrolle 29a in Eingriff genommen und im weiteren Verlauf der ansteigenden Bewegung des Aufnahmeelementes 17 über die Spitze 31 (vgl. Fig. 3) des Laufprofils der Laufschiene der ersten Förderstrecke 5 hinweg aus der Laufschienenführung herausgehoben, wobei der Bügelträger 3 auf den Übernahmeförderer 1 zum Transport in das obere Stockwerk 8 übernommen wird.

Jedes Aufnahmeelement 17 weist einen oberen Hakenabschnitt 51 auf, der gemäß Fig. 2, 3 und 4a die Laufrolle 29a eines betreffenden Bügelträgers 3 im Bereich der Laufrollenkehle 33 hintergreifen kann, um den Bügelträger 3 zuverlässig von der Laufschiene der ersten Förderstrecke 5 abzuheben und auch im Bereich des stärkeren Anstiegs der Transportstrecke 9 zum oberen Stockwerk 8 hin sicher zu halten.

Wie aus der Draufsicht auf den Übernahmekopf 11 gemäß Fig. 2 zu ersehen ist, werden die Aufnahmeelemente 17 nach Passieren der Übernahmestelle 49 wieder seitlich von der Laufschiene der ersten Förderstrecke 5 weggeführt. Von den Aufnahmeelementen 17 aufgenommene Bügelträger 3 sind dabei aufgrund der Aufwärtsbewegung der Aufnahmeelemente 17 bereits so weit von dem Laufprofil der Laufschiene abgehoben, daß es bei dieser Seitwärtsbewegung nicht zu einer Kollision mit der vorher an der Laufschiene geführten Laufrolle 29b des Bügelträgers 3 mit dem Laufschienenprofil kommt. Der Übernahmekopf 11 kann so gestaltet sein, daß die seitliche Ablenkung der Aufnahmeelemente 17 weg von der ersten Förderstrecke 5 in noch stärkerem Maße als dargestellt stattfindet, so daß das an den Haken 23 der Fördergutträger angehängte Fördergut (nicht gezeigt) seitlich an der ersten Förderstrecke 5 während der Aufwärtsbewegung auch dann sicher vorbeigeführt wird, ohne mit der Laufschiene in Berührung zu kommen, wenn sich die Übernahmestelle 49 abweichend von Fig. 1 nicht unmittelbar an einer Umlenkstation 18 der ersten Förderstrecke 5 befinden soll. Dadurch kann der Übernahmeförderer an beliebiger Stelle an die erste Förderstrecke 5 angebaut werden.

Bedarfsweise kann der Übernahmekopf 11 mittels einer (nicht gezeigten) Schwenkeinrichtung um eine näherungsweise vertikale Schwenkachse so weit gegenüber der Laufschiene der ersten Förderstrecke 5 verschwenkt werden, daß die Aufnahmeelemente 17 nicht mehr mit auf der Laufschiene befindlichen Bügelträgern 3 in Eingriff kommen können. Die betreffenden Bügelträger 3 können dann die Übernahmestelle 49 unbeeinflußt auf der Laufschiene der ersten Förderstrecke 5 passieren. Nach erneutem Heranschwenken des Übernahmekopfes 11 an die Laufschiene entsprechend der in Fig. 2 gezeigten Situation werden dann wieder auf der Laufschiene nachrückende Bügelträger 3 von dem Übernahmeförderer 1 übernommen und somit aus der Hängefördereinrichtung in dem unteren Stockwerk 6 ausgeschleust. Durch das Hin- und Herschwenken des Übernahmekopfes 11 kann somit eine gesteuerte Weichenfunktion realisiert werden.

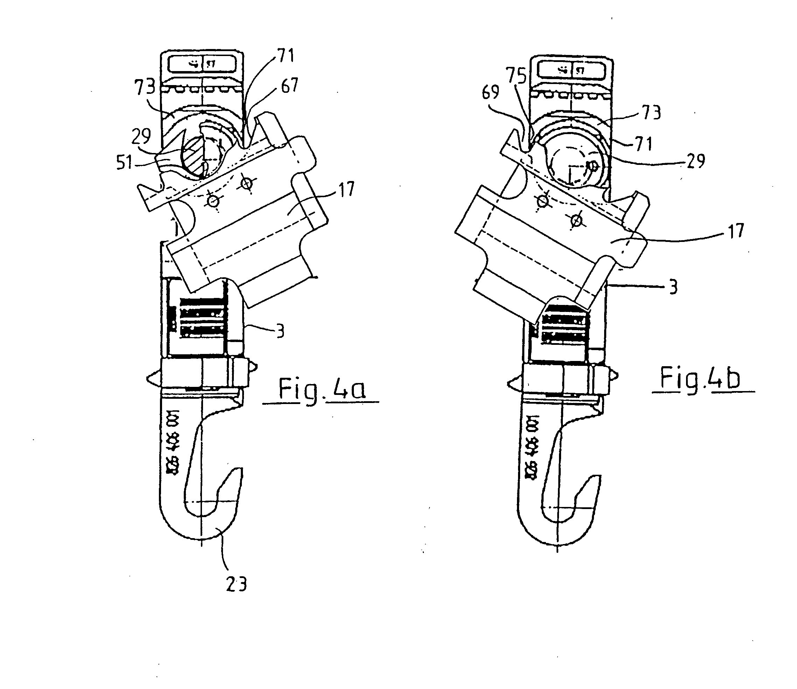

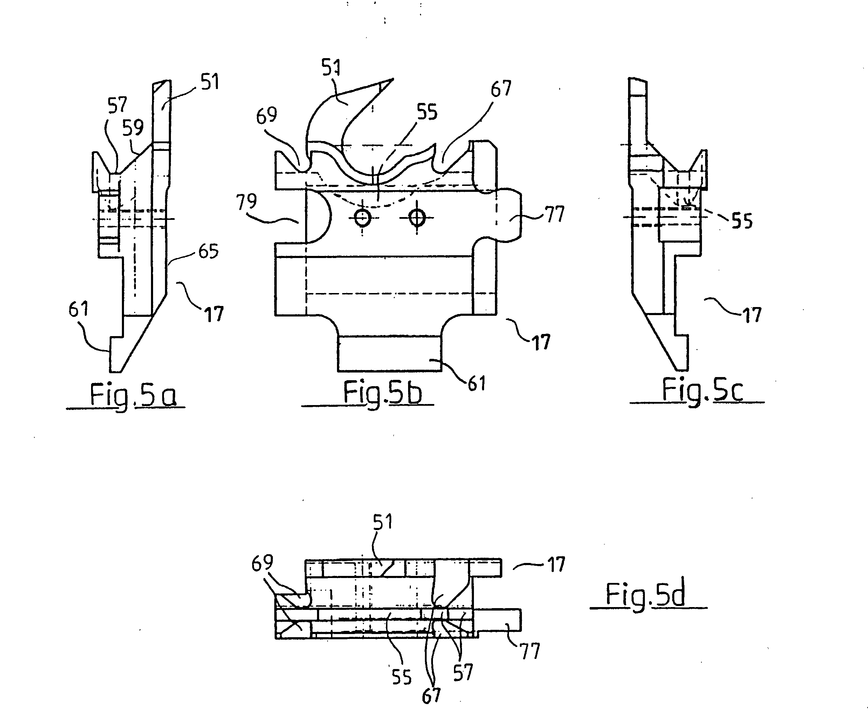

In den Figuren 5a - 5d ist in Vorderansicht, Seitenansicht, Rückansicht und Draufsicht ein aus Kunststoff gefertigtes Aufnahmeelement 17 detailliert dargestellt. Das Aufnahmeelement 17 weist eine taschenartige Vertiefung 55 auf, die zur stabilen Lagerung einer darin aufzunehmenden Laufrolle 29 eines mitgenommenen Bügelträgers 3 eine an die konische Kontur der Laufrolle 29 angepaßte Form hat. Bei der Aufnahme eines Bügelträgers 3 wird die betreffende Laufrolle 29 über eine Aufnahmerinne 57 in die taschenartige Vertiefung 55 geführt, wobei der seitlich und oberhalb der Vertiefung 55 liegende Hakenabschnitt 51 die Laufrolle an deren Kehle 33 hintergreift (vgl. auch Fig. 3 und Fig. 4a). Die Aufnahmerinne 57 weist ebenfalls eine Schrägfläche 59 auf, deren Kontur an die konische Neigung der in der Aufnahmerinne 57 zu führenden Laufrolle 29 des Bügelträgers 3 angepaßt ist. Am unteren Ende weist das Aufnahmeelement 17 einen Abstützabschnitt 61 auf, mit dem es sich an einer umlaufenden Fläche 63 des Rahmenteils 21 seitlich abstützen kann (vgl. Fig. 3). Hierdurch wird ein übermäßiges Kippen der Antriebskette 15 in der Kettenführungsnut 19 auch dann sicher vermieden, wenn der Bügelträger 3 und damit das Aufnahmeelement 17 durch schweres Fördergut stärker belastet ist. Der Abstützabschnitt 61 kann z.B. eine Rolle aufweisen, die an der umlaufenden Fläche 63 des Rahmenteils 21 abrollt.

Der Bügelträger 3 kann sich mit seinem dem Aufnahmeelement 17 zugewandten Fördervorsprung 41 an einer Seitenfläche 65 des Aufnahmeelementes 17 abstützen, wie dies in Fig. 3 gezeigt ist. Hierdurch werden Pendelbewegungen des von dem Aufnahmeelement 17 aufgenommenen Bügelträgers 3 wirksam gedämpft. Das Aufnahmeelement 17 weist ferner Verriegelungskerben 67 und 69 für einen Bügelträger 3 auf, die quer zur Bewegungsrichtung des Aufnahmeelementes 17 verlaufen.

Die vorderen Verriegelungskerben 67 treten mit einem Kantenabschnitt 71 eines die Laufrolle 29 oben überdeckenden, im wesentlichen bogenförmigen Dachsteges 73 in Eingriff, um den Bügelträger 3 sicher am Aufnahmeelement 17 zu verriegeln, sobald ein bestimmter Steigungswinkel (bei Rückwärtsfahrt Neigungswinkel) der Bewegungsbahn des Aufnahmeelementes 17 überschritten wird.

Die hinteren Verriegelungskerben 69 treten in der in Fig. 4b gezeigten Weise mit dem entgegengesetzten Kantenabschnitt 75 des Dachsteges 73 in Eingriff, um den Bügelträger 3 an dem Aufnahmeelement 17 zu sichern, wenn bei Abwärtsfahrt ein bestimmter Neigungswinkel zwischen dem Aufnahmeelement 17 und dem Bügelträger 3 überschritten wird. Bei der in Fig. 1 dargestellten Situation tritt der Fall der Abwärtsfahrt bzw. Rückwärtsfahrt mit Bügelträger nicht auf. In anderen Einsatzfällen des Übernahmeförderers nach der Erfindung kann jedoch die Förderstrecke stark geneigt verlaufende Abschnitte aufweisen oder eine Umkehrung der Förderrichtung vorgesehen sein.

Wie insbesondere aus Fig. 5b deutlich zu ersehen ist, weist das Aufnahmeelement 17 ferner eine nach vorne abstehende Zunge 77 und eine etwa komplementäre hintere Ausnehmung 79 auf. Bei der Anordnung im Gliederband 10 greift die vordere Zunge 77 in die entsprechende Ausnehmung 79 des in Vorwärtsrichtung benachbarten Aufnahmeelementes 17 ein und die rückwärtige Ausnehmung 79 nimmt die Zunge 77 eines rückwärtig benachbarten Aufnahmeelementes 17 auf. Die Aufnahmeelemente 17 sind somit über die ineinander eingreifenden Zungen 77 und Ausnehmungen 79 so verzahnt, daß ein unregelmäßiger Höhenversatz zwischen den Aufnahmeelementen 17 im Gliederband 10 im wesentlichen vermieden wird.

Die Teilung der Aufnahmeelemente 17 am Gliederband 10 ist unter Berücksichtigung des Steigungswinkels α (vgl. Fig. 1) des Übernahmekopfes 11 relativ zu der Laufschiene der ersten Förderstrecke 5 der Fördereinrichtung im unteren Stockwerk 6 so gewählt, daß bei der eingestellten Fördergeschwindigkeit immer nur ein Bügelträger 3 (auch bei Staudruck der Bügelträger 3) von einem jeweiligen Aufnahmeelement 17 aufgenommen wird.

Die Übernahme der Bügelträger 3 auf den Übernahmeförderer 1 erfolgt im Beispielsfall kontinuierlich mit der gleichen Geschwindigkeit, mit der die Bügelträger 3 an der Laufschiene der ersten Förderstrecke 5 bewegt werden. Ungeachtet dessen, ob sich die Bügelträger auf der Laufschiene einzeln oder in Gruppen der Übernahmestelle 49 nähern, wird jeder Bügelträger 3 zuverlässig von dem Übernahmeförderer nach der Erfindung übernommen und abtransportiert. Ein vorheriges Separieren der Bügelträger 3 auf der Laufschiene ist hierzu nicht erforderlich, so daß bei großer Fördergeschwindigkeit eine hohe Förderleistung erreicht werden kann.

Miteiner Versuchsanlage wurden Förder-und Übernahmegeschwindigkeiten von 0,5 m/s im kontinuierlichen Betrieb realisiert.

Die Abgabe der Bügelträger 3 von dem Übernahmeförderer 1 an die Laufschiene der im oberen Stockwerk 8 befindlichen Hängefördereinrichtung erfolgt in komplementärer Weise zu der oben beschriebenen Übernahme von der Laufschiene der im unteren Stockwerk 6 befindlichen Hängefördereinrichtung. Die Abgabe erfolgt über einen in Fig. 1 bei 13 vorgesehenen Übergabekopf, der im wesentlichen so aufgebaut ist, wie der in Fig. 2 gezeigte Übernahmekopf 11 und eine entsprechende Umlenkführung für die Antriebskette 15 aufweist.

Der Übergabekopf bei 13 in Fig. 1 ist unter dem Neigungswinkel β relativ zu der Laufschiene der oberen Hängefördereinrichtung schwach nach unten hin geneigt, so daß die von den Aufnahmeelementen 17 mitgenommenen Bügelträger 3 mit ihren den Aufnahmeelementen 17 abgewandten Laufrollen 29 von oben her auf das Laufprofil der Laufschiene 7 aufsetzen, wobei die Laufrolle 29 und das Laufprofil der Laufschiene der dritten Förderstrecke 7 in der in Fig. 3 bei 31 und 35 angedeuteten Weise in Eingriff kommen, so daß die Laufschiene die Führung der Laufrolle 29 übernimmt und sich der Bügelträger 3 dabei aus dem Aufnahmeelement 17 nach vorn herausbewegt, um schließlich von dem Übernahmeförderer 1 freizukommen.

Es kann zwischen dem Abgabekopf und der Laufschiene 7 ein (nicht gezeigter) Einweisungskeil angeordnet sein, der mit der der Laufschiene 7 abgewandten Seite des Bügeltragers 3 in Berührung kommt, um dessen seitliche Ablenkung zur Laufschiene 7 zu unterstützen.

Es ist zu betonen, daß für den Einsatz des Übernahmeförderers nach der Erfindung keine Änderungen oder Anpassungsmaßnahmen an den Bügelträgern 3 oder an den zuführenden und abführenden Hängefördereinrichtungen erforderlich sind. Die Hängefördereinrichtungen und die Bügelträger können daher konventioneller Bauart sein. Ferner kann der Übernahmekopf an jeder beliebigen Stelle längs der Laufschiene eines betreffenden Hängeförderers angesetzt sein, um Fördergutträger zu übernehmen. Entsprechendes gilt in bezug auf den Übergabekopf für die Übergabe von Fördergutträgern an eine Laufschiene eines Hängeförderers.

Vorzugsweise sind (nicht gezeigte) Mittel am Übernahmekopf oder/und am Übergabekopf vorgesehen, die die Kettenumlenkführung endseitig nach außen belasten, um eine automatische Kettenspannung zu realisieren. Ferner können Sensoren vorgesehen sein, die einen Kettenbruch, einen Federbruch der Kettenspannvorrichtung, eine übermäßige Kettenlängung und/oder einen übermäßigen Verschleiß der Kettenführungsnut registrieren, um ggf. ein Ausschaltsignal an eine Steuervorrichtung des Übernahmeförderers abzugeben, welche dann eine Notabschaltung des Übernahmeförderers bewirkt.

Alternativ zu der in Fig. 1 illustrierten Einsatzsituation kann der Übernahmeförderer nach der Erfindung bei entsprechender Förderstreckenführung auch dazu eingesetzt werden, Fördermittel 3 zwischen zwei oder mehr Hängefördereinrichtungen zu vermitteln, die sich z.B. in einem gemeinsamen Stockwerk befinden und ggf. in einer gemeinsamen Ebene liegende Laufschienen aufweisen. Dabei können sowohl der Übernahmekopf als auch der Übergabekopf jeweils wahlweise und gesteuert an eine betreffende Hängefördereinrichtung heranbewegt - oder von dieser wegbewegt werden, um in gesteuerter Weise Weichenfunktionen auszuführen, so daß umfangreiche Umlagerungs- und Sortieraufgaben erfüllt werden können. Dabei kann der Übernahmeförderer als Kreisförderer mit wahlweise umschaltbarer Förderrichtung ausgebildet sein.

Da die Förderstrecke eines Übernahmeförderers nach der Erfindung nahezu beliebig gestaltet werden kann, sind vielfältige Einsatzmöglichkeiten als raumgängiger Förderer denkbar.

Der Übernahmekopf und der Übergabekopf können in symmetrischer Weise so gestaltet sein, daß sie wahlweise linksbündig oder rechtsbündig an betreffende Laufschienen einer Hängeförderanlage zur Übernahme bzw. Übergabe von Bügelträgern angesetzt werden können.

## Patentansprüche

1. Fördereinrichtung mit einem Übernahmeförderer zur Übernahme von Eingriffsmittel aufweisenden Fördergutträgern (3) von einem Hängeförderer, bei dem die Fördergutträger (3) an einem Laufrollen-Führungsprofil zur Bewegung längs einer ersten Förderstrecke (5) geführt und an eigenen Laufrollen (29) hängend abgestützt sind, und zur Weiterleitung übernommener Fördergutträger (3) längs einer zweiten Förderstrecke (9), wobei die erste Förderstrecke (5) und die zweite Förderstrecke (9) an einer Übernahmestelle (49) eng benachbart seitlich versetzt verlaufen,
**dadurch gekennzeichnet,**
**dass** der Übernahmeförderer eine Reihe aufeinander folgend an einem gemeinsamen Zugmittel (15) angeordneter und von dem Zugmittel (15) entlang der zweiten Förderstrecke (9) bewegter Aufnahmeelemente (17) für die Fördergutträger (3) aufweist und die Aufnahmeelemente (17) derart geführt sind, dass sie an der Übernahmestelle (49) eine Hubbewegung relativ zu dem Laufrollen-Führungsprofil des Hängeförderers ausführen, um jeweils von dem Hängeförderer längs der ersten Förderstrecke (5) der Übernahmestelle (49) zugeführte Fördergutträger (3) an den davon abstehenden Eingriffsmitteln (29) zur Mitnahme längs der zweiten Förderstrecke (9) in Eingriff zu nehmen und von dem Führungsprofil des Hängeförderers abzuheben.

2. Fördereinrichtung nach Anspruch 1, **dadurch gekennzeichnet, daß** die zweite Förderstrecke (9) an der Übernahmestelle (49) eine Steigung mit einem Steigungswinkel (α) relativ zur ersten Förderstrecke (5) aufweist, und daß die Aufnahmeelemente (17) jeweils einen Hakenabschnitt (51) aufweisen, mit dem sie das Eingriffsmittel (29) eines jeweils an der Übernahmestelle (49) befindlichen Fördergutträgers (3) bei ihrer Bewegung längs der Steigung der zweiten Förderstrecke (9) automatisch hinter- und untergreifen, um den Fördergutträger (3) von dem Laufrollen-Führungsprofil der Hängefördereinrichtung abzuheben.

3. Fördereinrichtung nach Anspruch 1 oder 2, **dadurch gekennzeichnet, daß** die Aufnahmeelemente (17) derart geführt sind, daß sie unmittelbar nach Passieren der Übernahmestelle (49) unter Vergrößerung ihres Abstandes zur ersten Förderstrecke (5) seitlich abgelenkt werden.

4. Fördereinrichtung nach einem der vorhergehenden Ansprüche, **dadurch gekennzeichnet, daß** jeder Fördergutträger (3) einen zentralen Trägerabschnitt (27) aufweist, von dem an zwei einander gegenüberliegenden Seiten jeweils eine Laufrolle (29) eines Laufrollenpaares absteht, wobei ein betreffender Fördergutträger (3) in der Hängefördereinrichtung jeweils mit einer der beiden Laufrollen (29) an dem Laufrollen-Führungsprofil seitlich angehängt und an dieser Laufrolle (29) geführt ist, und wobei die andere Laufrolle (29) als Eingriffsmittel für die Ineingriffnahme durch ein betreffendes Aufnahmeelement (17) des Übernahmeförderers dient.

5. Fördereinrichtung nach einem der vorhergehenden Ansprüche, **dadurch gekennzeichnet, daß** das Zugmittel (15) ein als Endlosschleife ausgebildetes, um zwei Umlenkeinrichtungen umlaufend angetriebenes und längs der zweiten Förderstrecke (9) geführtes Antriebsband ist, das am Schleifenumfang die Aufnahmeelemente (17) für die Fördergutträger (3) in einer Endlosreihe aufweist.

6. Fördereinrichtung nach Anspruch 5, **dadurch gekennzeichnet, daß** das Antriebsband (15) eine Kette, insbesondere Gelenkkette ist.

7. Fördereinrichtung nach einem der vorhergehenden Ansprüche, **dadurch gekennzeichnet, daß** das Zugmittel (15) zur kontinuierlichen Bewegung antreibbar ist und daß der Bewegungsablauf der Aufnahmeelemente (17) an der Übernahmestelle (49) und die Geometrie und Teilung der Aufnahmeelemente (17) so auf die Fördergeschwindigkeit des Hängeförderers abgestimmt sind, daß jeder von dem Hängeförderer der Übernahmestelle (49) zugeführte Fördergutträger (3) einzeln von einem jeweiligen Aufnahmeelement (17) des Übernahmeförderers zur Mitnahme längs der zweiten Förderstrecke (9) in Eingriff genommen wird.

8. Fördereinrichtung nach einem der vorhergehenden Ansprüche, **dadurch gekennzeichnet, daß** zur Realisierung einer Weichenfunktion der Abstand zwischen der ersten Förderstrecke (5) und der zweiten Förderstrecke (9) an der Übernahmestelle (49) gesteuert veränderbar ist, so daß die auf der ersten Förderstrecke (5) befindlichen Fördergutträger (3) unbeeinflußt von den außer Reichweite bewegten Aufnahmeelementen (17) auf der ersten Förderstrecke (5) verbleibend die Übergangsstelle (49) passieren können, wenn der Abstand zwischen den Förderstrecken (5, 9) an der Übergangsstelle (49) um einen bestimmten Wert vergrößert ist.

9. Fördereinrichtung nach einem der Ansprüche 5 - 8, **dadurch gekennzeichnet, daß** der Übernahmeförderer einen Übernahmekopf (11) hat, der eine der Umlenkeinrichtungen für das Zugmittel (15) aufweist und der in einer aktiven Position die Aufnahmeelemente (17) zur Eingriffnahme von Fördergutträgern (3) an die erste Förderstrecke (5) heranführt.

10. Fördereinrichtung nach Anspruch 8 oder 9, **dadurch gekennzeichnet, daß** der Übernahmekopf (11) zur Realisierung einer Weichenfunktion zwischen der aktiven Position und einer passiven Position relativ zu dem Hängeförderer bewegbar, insbesondere schwenkbar, ist, wobei er in der passiven Position die Aufnahmeelemente (17) außer Reichweite zu den auf der ersten Förderstrecke (5) bewegten Fördergutträgern (3) führt.

11. Fördereinrichtung nach einem der vorhergehenden Ansprüche, **dadurch gekennzeichnet, daß** die zweite Förderstrecke (9) an einer Übergabestelle (13) eng benachbart seitlich versetzt zu einer dritten Förderstrecke (7) verläuft, die entsprechend der ersten Förderstrecke (5) ein Laufrollen-Führungsprofil für die Fördergutträger (3) aufweist, und daß die Aufnahmeelemente (17) derart geführt sind, daß sie an der Übergabestelle (13) eine Absenkbewegung relativ zu dem Laufrollen-Führungsprofil der dritten Förderstrecke (7) ausführen, um von der ersten Förderstrecke (5) aufgenommene Fördergutträger (3) mit ihren jeweils von den Aufnahmeelementen (17) nach außen abstehenden freien Laufrollen in das Laufrollen-Führungsprofil der dritten Förderstrecke (7) von oben her einzusetzen.

12. Fördereinrichtung nach Anspruch 11, **dadurch gekennzeichnet, daß** die zweite Förderstrecke (9) an der Übergabestelle (13) eine Neigung mit einem Neigungswinkel (β) relativ zu der dritten Förderstrecke (7) aufweist, wobei die unter dem Neigungswinkel (β) der Übergabestelle (13) zugeführten Fördergutträger (3) an ihren von den Aufnahmeelementen (17) nach außen abstehenden, freien Laufrollen (29) von dem Laufrollen-Führungsprofil der dritten Förderstrecke (7) derart in Eingriff genommen werden, daß sie zwangsweise von den Aufnahmeelementen (17) freikommen und an die dritte Förderstrecke (7) übergeben werden.

13. Fördereinrichtung nach einem der Ansprüche 11 - 12, **dadurch gekennzeichnet**, daßdie Aufnahmeelemente (17) so geführt sind, daß sie unmittelbar nach Passieren der Übergabestelle (13) unter Vergrößerung ihres Abstandes zur dritten Förderstrecke (7) seitlich abgelenkt werden.

14. Fördereinrichtung nach einem der Ansprüche 11 - 13, **dadurch gekennzeichnet, daß** zur Realisierung einer Weichenfunktion der Abstand zwischen der zweiten Förderstrecke (9) und der dritten Förderstrecke (7) an der Übergabestelle (13) gesteuert veränderbar ist, so daß die Fördergutträger (3) unbeeinflußt von dem Laufrollen-Führungsprofil der dritten Förderstrecke (7) die Übergabestelle auf der zweiten Förderstrecke (9) verbleibend passieren, wenn der Abstand zwischen der zweiten Förderstrecke und der dritten Förderstrecke an der Übergabestelle auf einen bestimmten Wert vergrößert ist.

15. Fördereinrichtung nach einem der Ansprüche 11 - 14, **dadurch gekennzeichnet, daß** der Übernahmeförderer einen die Aufnahmeelemente (17) an die dritte Förderstrecke (7) heranführenden Übergabekopf mit einer Umlenkeinrichtung für das Zugmittel (15) aufweist.

16. Fördereinrichtung nach Anspruch 15, dadurch gekennze chnet, daß der Übergabekopf zur Realisierung einer Weichenfunktion zwischen seiner an die dritte Förderstrecke (7) angenäherten aktiven Position und einer passiven Position relativ zu der dritten Förderstrecke (7) bewegbar, insbesondere schwenkbar ist, wobei er in der passiven Position die Aufnahmeelemente (17) außer Reichweite zu der dritten Förderstrecke (7) führt, so daß die Fördergutträger (3) die Übergabestelle (13) auf der zweiten Förderstrecke (9) verbleibend passieren können.

17. Fördereinrichtung nach einem der vorhergehenden Ansprüche, **dadurch gekennzeichnet, daß** die zweite Förderstrecke (9) dreidimensional verläuft.

18. Fördereinrichtung nach einem der vorhergehenden Ansprüche, **dadurch gekennzeichnet, daß** die Aufnahmeelemente (17) jeweils eine taschenartige Vertiefung (55) zur Aufnahme der betreffenden Laufrolle (29) eines Fördergutträgers (3) aufweisen, wobei die taschenartige Vertiefung (55) eine der Form der Laufrolle (29) angepaßte Kontur hat.

19. Fördereinrichtung nach Anspruch 18, **dadurch gekennzeichnet, daß** die Aufnahmeelemente (17) jeweils eine die Laufrolle (29) bei der Aufnahme des betreffenden Fördergutträgers (3) in die taschenartige Vertiefung (55) einweisende Aufnahmerinne (57) haben.

20. Fördereinrichtung nach Anspruch 18 oder 19, **dadurch gekennzeichnet, daß** die Aufnahmeelemente (17) seitlich der taschenartigen Vertiefung (55) einen nach oben abstehenden und nach vorne hin offenen Hakenabschnitt (51) aufweisen, der eine in der taschenartigen Vertiefung (55) aufgenommene Laufrolle (29) eines aufgegriffenen Fördergutträgers (3) übergreift.

21. Fördereinrichtung nach einem der vorhergehenden Ansprüche, **dadurch gekennzeichnet, daß** jedes Aufnahmeelement (17) einen jeweils aufgenommenen Fördergutträger (3) schwenkbeweglich um die Laufrollenachse an dessen Laufrolle (29) abstützt, so daß sich der Fördergutträger (3) unter Wirkung der Schwerkraft vertikal ausrichten kann, wenn das Aufnahmeelement (17) bei Bewegung längs einer Steigung oder bei Bewegung längs einer Neigung der zweiten Förderstrecke (9) eine Schrägstellung relativ zur Vertikalen erfährt, wobei das Aufnahmeelement (17) eine erste Verriegelungskerbe (67) aufweist, die mit einer ersten Verriegelungskante (71) des Fördergutträgers (3) in Eingriff kommt, um den Fördergutträger (3) am Aufnahmeelement (17) bei Bewegung längs einer einen vorbestimmten Steigungswinkel überschreitenden Steigung der zweiten Förderstrecke (9) zu sichern.

22. Fördereinrichtung nach einem der vorhergehenden Ansprüche, **dadurch gekennzeichnet, daß** jedes Aufnahmeelement (17) einen jeweils aufgenommenen Fördergutträger (3) schwenkbeweglich um die Laufrollenachse an dessen Laufrolle (29) abstützt, so daß sich der Fördergutträger (3) unter der Wirkung der Schwerkraft vertikal ausrichten kann, wenn das Aufnahmeelernent (17) bei Bewegung längs einer Steigung oder bei Bewegung längs einer Neigung der zweiten Förderstrecke (9) eine Schrägstellung erfährt, wobei das Aufnahmeelement (17) eine zweite Verriegelungskerbe (69) aufweist, die mit einer zweiten Verriegelungskante (75) des Fördergutträgers (3) in Eingriff kommt, um den Fördergutträger (3) am Aufnahmeelement (17) bei Bewegung längs einer einen vorbestimmten Neigungswinkel überschreitenden Neigung der zweiten Förderstrecke (9) zu sichern.

## Claims

1. Conveying device comprising a take-over conveyor for the take-over of conveyed material carriers (3) having engagement means, from a suspension conveyor, in which the conveyed material carriers (3) are guided on a roller guiding profile for movement along a first conveying section (5) and are supported suspended by their rollers (29), and for conveying taken-over conveyed material carriers (3) along a second conveying section (9), wherein the first conveying section (5) and the second conveying section (9) run in a closely adjacent, laterally offset manner at a take-over point (49), **characterised in that** the take-over conveyor comprises a number of receiving elements (17) for the conveyed material carriers (3), which receiving elements are disposed in succession on a common traction means (15) and moved by the traction means (15) along the second conveying section (9), and the receiving elements (17) are guided in such a way that at the take-over point (49) they execute a lifting motion relative to the roller guiding profile of the suspension conveyor in order in each case to intercept conveyed material carriers (3), which have been fed by the suspension conveyor along the first conveying section (5) to the take-over point (49), at the engagement means (29) projecting therefrom for entrainment along the second conveying section (9) and to lift them off the guiding profile of the suspension conveyor.

2. Conveying device according to claim 1, **characterised in that** the second conveying section (9) at the take-over point (49) has an ascending slope with an angle of slope (α) relative to the first conveying section (5), and that the receiving elements (17) each comprise a hook portion (51), with which in the course of their movement along the ascending slope of the second conveying section (9) they automatically engage behind and under the engagement means (29) of a respective conveyed material carrier (3) situated at the take-over point (49) in order to lift the conveyed material carrier (3) off the roller guiding profile of the suspension conveying device.

3. Conveying device according to claim 1 or 2, **characterised in that** the receiving elements (17) are guided in such a way that immediately after passing the take-over point (49) they are laterally deflected, simultaneously increasing their distance from the first conveying section (5).

4. Conveying device according to any of the preceding claims, **characterised in that** each conveyed material carrier (3) comprises a central carrier portion (27), from each of two mutually opposed sides of which one roller (29) of a roller pair projects, wherein a respective conveyed material carrier (3) is laterally suspended in the suspension conveying device in each case by one of the two rollers (29) on the roller guiding profile and guided on said roller (29), and wherein the other roller (29) serves as an engagement means for interception by a respective receiving element (17) of the take-over conveyor.

5. Conveying device according to any of the preceding claims, **characterised in that** the traction means (15) is a driving band in the form of an endless loop, which is driven so as to revolve around two return devices and is guided along the second conveying section (9) and which on the loop periphery comprises the receiving elements (17) for the conveyed material carriers (3) in a continuous row.

6. Conveying device according to claim 5, **characterised in that** the driving band (15) is a chain, in particular a link chain.

7. Conveying device according to any of the preceding claims, **characterised in that** the traction means (15) is drivable for continuous motion and that the sequence of motion of the receiving elements (17) at the take-over point (49) and the geometry and pitch of the receiving elements (17) are adapted to the conveying speed of the suspension conveyor in such a way that each conveyed material carrier (3) fed by the suspension conveyor to the take-over point (49) is individually intercepted by a respective receiving element (17) of the take-over conveyor for entrainment along the second conveying section (9).

8. Conveying device according to any of the preceding claims, **characterised in that**, for performing a distributing guide function, the distance between the first conveying section (5) and the second conveying section (9) at the take-over point (49) is variable in a controlled manner so that the conveyed material carriers (3) situated on the first conveying section (5) may, unaffected by the receiving elements (17) moved out of range, pass the transition point (49) while remaining on the first conveying section (5) when the distance between the conveying sections (5, 9) at the transition point (49) has been increased by a specific value.

9. Conveying device according to any of claims 5 to 8, **characterised in that** the take-over conveyor has a take-over head (11), which comprises one of the deflection means for the traction means (15) and which in an active position brings the receiving elements (17) up to the first conveying section (5) for the interception of conveyed material carriers (3).

10. Conveying device according to claim 8 or 9, **characterised in that** the take-over head (11), for performing a distributing guide function, is movable, in particular pivotal, between the active position and a passive position relative to the suspension conveyor, wherein in the passive position it guides the receiving elements (17) out of range of the conveyed material carriers (3) moving along the first conveying section (5).

11. Conveying device according to any of the preceding claims, **characterised in that** the second conveying section (9) at a transfer point (13), runs in a closely adjacent and laterally offset manner relative to a third conveying section (7), which in accordance with the first conveying section (5) comprises a roller guiding profile for the conveyed material carriers (3), and that the receiving elements (17) are guided in such a way that at the transfer point (13) they execute a lowering motion relative to the roller guiding profile of the third conveying section (7) in order to insert conveyed material carriers (3), which have been received from the first conveying section (5), by their free rollers, which in each case project outwards from the receiving elements (17), from above into the roller guiding profile of the third conveying section (7).

12. Conveying device according to claim 11, **characterised in that** the second conveying section (9) at the transfer point (13) has a descending slope with an angle of slope (β) relative to the third conveying section (7), wherein the conveyed material carriers (3) fed at the angle of slope (β) to the transfer point (13) are intercepted at their free rollers (29), which project outwards from the receiving elements (17), by the roller guiding profile of the third conveying section (7) in such a way that they inevitably come clear of the receiving elements (17) and are transferred to the third conveying section (7).

13. Conveying device according to any of claims 11 to 12, **characterised in that** the receiving elements (17) are guided in such a way that immediately after passing the transfer point (13) they are laterally deflected, simultaneously increasing their distance from the third conveying section (7).

14. Conveying device according to any of claims 11 to 13, **characterised in that**, for performing a distributing guide function, the distance between the second conveying section (9) and the third conveying section (7) at the transfer point (13) is variable in a controlled manner so that the conveyed material carriers (3) may, unaffected by the roller guiding profile of the third conveying section (7), pass the transfer point while remaining on the second conveying section (9) when the distance between the second conveying section and the third conveying section at the transfer point has been increased to a specific value.

15. Conveying device according to any of claims 11 to 14, **characterised in that** the take-over conveyor comprises a transfer head, which brings the receiving elements (17) up to the third conveying section (7) and comprises a return device for the traction means (15).

16. Conveying device according to claim 15, **characterised in that** the transfer head, for performing a distributing guide function, is movable, in particular pivotal, between its active position close to the third conveying section (7) and a passive position relative to the third conveying section (7), wherein in the passive position it guides the receiving elements (17) out of range of the third conveying section (7) so that the conveyed material carriers (3) may pass the transfer point (13) while remaining on the second conveying section (9).

17. Conveying device according to any of the preceding claims, **characterised in that** the second conveying section (9) extends in a three-dimensional manner.

18. Conveying device according to any of the preceding claims, **characterised in that** the receiving elements (17) each comprise a pocket-like recess (55) for receiving the respective roller (29) of a conveyed material carrier (3), wherein the pocket-like recess (55) has a contour adapted to the shape of the roller (29).

19. Conveying device according to claim 18, **characterised in that** the receiving elements (17) each have a receiving channel (57), which in the course of receiving the respective conveyed material carrier (3) directs the roller (29) into the pocket-like recess (55).

20. Conveying device according to claim 18 or 19, **characterised in that** the receiving elements (17), to the side of the pocket-like recess (55) have an upwardly projecting hook portion (51), which is open in a forward direction and engages over a roller (29), which has been received in the pocket-like recess (55), of a picked-up conveyed material carrier (3).

21. Conveying device according to any of the preceding claims, **characterised in that** each receiving element (17) supports a respective received conveyed material carrier (3) pivotally about the roller axis on the roller (29) thereof so the conveyed material carrier (3) may align itself vertically under the effect of gravity when the receiving element (17) in the course of moving along an ascending slope or in the course of moving along a descending slope of the second conveying section (9) experiences an inclination relative to the vertical, wherein the receiving element (17) has a first locking notch (67), which comes into engagement with a first locking edge (71) of the conveyed material carrier (3) in order to secure the conveyed material carrier (3) on the receiving element (17) while moving along an ascending slope of the second conveying section (9) exceeding a predetermined angle of slope.

22. Conveying device according to any of the preceding claims, **characterised in that** each receiving element (17) supports a respective received conveyed material carrier (3) pivotally about the roller axis on the roller (29) thereof so the conveyed material carrier (3) may align itself vertically under the effect of gravity when the receiving element (17) in the course of moving along an ascending slope or in the course of moving along a descending slope of the second conveying section (9) experiences an inclination, wherein the receiving element (17) has a second locking notch (69), which comes into engagement with a second locking edge (75) of the conveyed material carrier (3) in order to secure the conveyed material carrier (3) on the receiving element (17) while moving along a descending slope of the second conveying section (9) exceeding a predetermined angle of slope.

## Revendications

1. Dispositif de transport comportant un transporteur de prise en charge destiné à prendre en charge des supports d'objets à transporter (3), présentant des moyens d'engagement, provenant d'un transporteur suspendu, dans lequel les supports d'objets à transporter (3) sont guidés sur un profilé de guidage à galets de roulement afin de se déplacer le long d'une première section de transport (5) tout en étant suspendus à leurs propres galets de roulement (29), et afin de transmettre les supports d'objets à transporter (3) pris en charge le long d'une deuxième section de transport (9), la première section de transport (5) et la deuxième section de transport (9) étant très proches l'une de l'autre et latéralement décalées, au niveau d'un point de prise en charge (49),
**caractérisé en ce que**
le transporteur de prise en charge comporte une rangée d'éléments de réception (17) qui sont destinés aux supports d'objets à transporter (3) et qui sont disposés l'un derrière l'autre sur un moyen de traction (15) commun et entraînés par ce moyen (15), le long de la seconde section de transport (9), et **en ce que** les éléments de réception (17) sont guidés de telle sorte qu'ils effectuent, au niveau du point de prise en charge (49), un mouvement de levée, par rapport au profilé de guidage à galets de roulement du transporteur suspendu, pour saisir les supports d'objets à transporter (3) amenés par le dispositif de transport suspendu, le long de la première section de transport (5), au point de prise en charge (49), au niveau des moyens d'engagement (29) faisant saillie par rapport aux supports, afin d'entraîner ces supports le long de la seconde section de transport (9) et afin de les soulever du profilé de guidage du transporteur suspendu.

2. Dispositif de transport selon la revendication 1, **caractérisé en ce que** la seconde section de transport (9) présente, au point de prise en charge (49), une pente avec un angle d'inclinaison (α) par rapport à la première section de transport (5), et **en ce que** les éléments de réception (17) présentent chacun une partie formant crochet (51) au moyen de laquelle ils saisissent automatiquement, par derrière et par dessous, le moyen d'engagement (29) d'un support d'objets à transporter (3) qui se trouve au point de prise en charge (49), lorsqu'ils se déplacent le long de la pente de la deuxième section de transport (9), afin de soulever le support d'objets à transporter (3) du profilé de guidage à galets de roulement du dispositif de transport suspendu.

3. Dispositif de transport selon la revendication 1 ou 2, **caractérisé en ce que** les éléments de réception (17) sont guidés de telle sorte qu'immédiatement après avoir dépassé le point de prise en charge (49), ils sont déviés latéralement en augmentant leur écart par rapport à la première section de transport (5).

4. Dispositif de transport selon l'une des revendications précédentes, **caractérisé en ce que** chaque support d'objets à transporter (3) présente un tronçon porteur central (27) dont dépasse, sur deux faces opposées, un galet de roulement (29) faisant partie d'une paire de galets, un support d'objets à transporter (3) correspondant, présent dans le dispositif de transport suspendu, étant suspendu latéralement sur l'un des deux galets (29) présents dans le profilé de guidage à galets de roulement, et étant guidé sur ce galet de roulement (29), et l'autre galet de roulement (29) servant de moyen d'engagement destiné à être engrené par un élément de réception (17) correspondant du transporteur de prise en charge.

5. Dispositif de transport selon l'une des revendications précédentes, **caractérisé en ce que** le moyen de traction (15) est une bande d'entraînement conformée en boucle sans fin, entraînée pour circuler autour de deux dispositifs de renvoi et guidée le long de la deuxième section de transport (9), qui, sur la périphérie de la boucle, comprend les éléments de réception (17) des supports d'objets à transporter (3), disposés dans une rangée sans fin.

6. Dispositif de transport selon la revendication 5, **caractérisé en ce que** la bande d'entraînement (15) est une chaîne, en particulier une chaîne à articulations.

7. Dispositif de transport selon l'une des revendications précédentes, **caractérisé en ce que** le moyen de traction (15) est susceptible d'être entraîné dans un mouvement continu et **en ce que** le déroulement des déplacements des éléments de réception (17), au point de prise en charge (49), et la géométrie et la répartition des éléments de réception (17), sont coordonnés avec la vitesse de transport du transporteur suspendu de telle sorte que chaque support d'objets à transporter (3) acheminé par le transporteur suspendu vers le point de prise en charge (49) est individuellement saisi par l'élément de réception (17) correspondant du transporteur de prise en charge afin d'être entraîné le long de la seconde section de transport (9).

8. Dispositif de transport selon l'une des revendications précédentes, **caractérisé en ce qu'**afin de mettre en oeuvre une fonction d'aiguillage, l'écart entre la première section de transport (5) et la deuxième section de transport (9), au point de prise en charge (49), est susceptible d'être modifié afin que les supports d'objets à transporter (3) qui se trouvent sur la première section de transport (5), n'étant pas influencés par les éléments de réception (17) déplacés hors de portée, puissent rester sur la première section de transport (5) et passer le point de transition (49), lorsque l'écart entre les sections de transport (5, 9), au point de transition (49), augmente d'une certaine valeur.

9. Dispositif de transport selon l'une des revendications 5 à 8, **caractérisé en ce que** le transporteur de prise en charge possède une tête de prise en charge (11), qui présente l'un des dispositifs de renvoi destiné au moyen de traction (15) et qui, dans une position active, amène les éléments de réception (17) sur la première section de transport (5) pour qu'ils saisissent des supports d'objets à transporter (3).

10. Dispositif de transport selon la revendication 8 ou 9, **caractérisé en ce que** la tête de prise en charge (11), pour mettre en oeuvre une fonction d'aiguillage entre la position active et une position passive, est susceptible d'être déplacée par rapport au transporteur suspendu et en particulier d'être basculée, la tête, en position passive, guidant les éléments de réception (17) hors de portée des supports d'objets à transporter (3) qui se trouvent sur la première section de transport (5).

11. Dispositif de transport selon l'une des revendications précédentes, **caractérisé en ce que** la deuxième section de transport (9), au niveau d'un point de transfert (13), est très proche et latéralement décalée par rapport à une troisième section de transport (7) qui présente, comme la première section de transport (5), un profilé de guidage à galets de roulement destiné aux supports d'objets à transporter (3), et **en ce que** les éléments de réception (17) sont conçus de telle sorte qu'ils exécutent, au niveau du point de transfert (13), un mouvement d'abaissement par rapport au profilé de guidage à galets de roulement de la troisième section de transport (7), afin d'insérer, par en-haut, les supports d'objets à transporter (3) reçus par la première section de transport (5), par leurs galets libres qui dépassent des éléments de réception (17), dans le profilé de guidage à galets de roulement de la troisième section de transport (7)

12. Dispositif de transport selon la revendication 11, **caractérisé en ce que** la deuxième section de transport (9), au point de transfert (13), présente une pente avec un angle d'inclinaison (β) par rapport à la troisième section de transport (7), les supports d'objets à transporter (3) acheminés, selon l'angle d'inclinaison (β), vers le point de transfert (13) étant saisis, par leurs galets (29) libres dépassant des éléments de réception (17), par le profilé de guidage à galets de roulement de la troisième section de transport (7) de telle sorte qu'ils se dégagent obligatoirement des éléments de réception (17) et soient transférés sur la troisième section de transport (7).

13. Dispositif de transport selon l'une des revendications 11 et 12, **caractérisé en ce que** les éléments de réception (17) sont guidés de telle sorte qu'immédiatement après avoir dépassé le point de transfert (13), ils sont déviés latéralement en augmentant leur écart par rapport à la troisième section de transport (7).

14. Dispositif de transport selon l'une des revendications 11 à 13, **caractérisé en ce qu'**afin de mettre en oeuvre une fonction d'aiguillage, l'écart entre la deuxième section de transport (9) et la troisième section de transport (7), au point de transfert (13), est susceptible d'être modifié afin que les supports d'objets à transporter (3), n'étant pas influencés par le profilé de guidage à galets de roulement de la troisième section de transport (7), puissent dépasser le point de transfert en restant sur la deuxième section de transport (9), lorsque l'écart entre la deuxième section de transport et la troisième section de transport, au point de transfert, augmente d'une certaine valeur.

15. Dispositif de transport selon l'une des revendications 11 à 14, **caractérisé en ce que** le transporteur de prise en charge présente une tête de prise en charge amenant les éléments de réception (17) sur la troisième section de transport (7), ainsi qu'un dispositif de renvoi pour le moyen de traction (15).

16. Dispositif de transport selon la revendication 15, **caractérisé en ce que** la tête de transfert, pour mettre en oeuvre une fonction d'aiguillage entre sa position active, rapprochée de la troisième section de transport, et une position passive par rapport à la troisième section de transport (7), est susceptible d'être déplacée et en particulier d'être basculée, la tête, en position passive, guidant les éléments de réception (17) hors de portée de la troisième section de transport (7), afin que les supports d'objets à transporter (3) puissent dépasser le point de transfert (13) en restant sur la deuxième section de transport (9).

17. Dispositif de transport selon l'une des revendications précédentes, **caractérisé en ce que** la deuxième section de transport (9) s'étend dans trois dimensions.

18. Dispositif de transport selon l'une des revendications précédentes, **caractérisé en ce que** les éléments de réception (17) présentent chacun un évidement du type poche (55) destiné à recevoir le galet (29) associé d'un support d'objets à transporter (3), l'évidement en forme de poche (55) possédant un contour adapté à la forme du galet de roulement (29).

19. Dispositif de transport selon la revendication 18, **caractérisé en ce que** les éléments de réception (17) possèdent chacun un canal formant logement (57) envoyant le galet de roulement (29), lors de la réception du support d'objets à transporter (3) correspondant, dans l'évidement en forme de poche (55).

20. Dispositif de transport selon la revendication 18 ou 19, **caractérisé en ce que** les éléments de réception (17), sur le côté de l'évidement du type poche (55), présentent une partie formant crochet (51), dépassant vers le haut et ouverte vers l'avant, qui coiffe un galet de roulement (29), logé dans l'évidement en forme de poche (55), d'un support d'objets à transporter (3) qui a été saisi.

21. Dispositif de transport selon l'une des revendications précédentes, **caractérisé en ce que** chaque élément de réception (17) supporte, sur son galet de roulement (29), un support d'objets à transporter (3) reçu, avec possibilité de pivoter autour de l'axe du galet de roulement, de telle sorte que le support d'objets à transporter (3), sous l'action de la force de gravité, puisse se redresser verticalement, lorsque l'élément de réception (17), se déplaçant sur une pente montante ou sur une pente descendante de la deuxième section de transport (9), se place en oblique par rapport à la verticale, l'élément de réception (17) présentant une première encoche de verrouillage (67) qui coopère avec une première arête de verrouillage (71) du support d'objets à transporter (3), afin que le support d'objets à transporter (3) présent sur l'élément de réception (17) soit retenu lorsqu'il se déplace sur une pente de la deuxième section de transport (9) dont l'angle d'inclinaison dépasse une valeur prédéterminée.

22. Dispositif de transport selon l'une des revendications précédentes, **caractérisé en ce que** chaque élément de réception (17) supporte, sur son galet de roulement (29), un support d'objets à transporter (3) reçu, avec possibilité de pivoter autour de l'axe du galet de roulement, de telle sorte que le support d'objets à transporter (3), sous l'action de la force de gravité, puisse se redresser verticalement, lorsque l'élément de réception (17), se déplaçant sur une pente montante ou sur une pente descendante de la deuxième section de transport (9), puisse se placer en oblique, l'élément de réception (17) présentant une deuxième encoche de verrouillage (69) qui coopère avec une deuxième arête de verrouillage (75) du support d'objets à transporter (3), afin que le support d'objets à transporter (3) présent sur l'élément de réception (17) soit retenu lorsqu'il se déplace sur une pente de la deuxième section de transport (9) dont l'angle d'inclinaison dépasse une valeur prédéterminée.
